# EUROPEAN PATENT APPLICATION

(11) **EP 3 040 150 A1**
(43) Date of publication of application: **06.07.2016**
(21) Application number: 14200466.2
(22) Date of filing: 29.12.2014
(51) Int. Cl.: B23K 9/10, B08B 15/00, B08B 15/04, B23K 9/16, B23K 9/29, B23K 9/32, B23K 37/02, B23K 9/00

(54) **Mobile welding and purifying apparatus with a welding unit and a purifying unit mounted on a surface having wheels**

(71) Applicant: Aerservice S.R.L., 35020 Legnaro (PD) (IT)
(72) Inventor: BERETTA, FABRIZIO, 35124 PADOVA (IT)
(74) Representative: Modiano, Micaela Nadia

(57) **Abstract**

The present application relates to a mobile welding and purifying apparatus (10), which comprises at least one welding unit (11) and at least one purifier (12), the latter provided with an arm (19) for aspirating the welding fumes, and which are integral with a single supporting surface (13) supported by wheels (14) for the movement of the entire apparatus (10).

## Description

The present invention relates to a mobile welding and purifying apparatus.

Welding operations can be performed in fixed welding stations or in different stations by moving an apparatus complete with welding unit, fume purifier and sometimes also a cylinder of technical gas. As is known, in fact, during welding it is indispensable to use a purifier capable of aspirating and filtering the welding fumes in order to prevent their noxious effects.

Currently, portable purifiers are known for protecting the operator from welding fumes while ensuring the possibility to move within a work space without having to install a fixed wall-mounted system, which instead would constrain the layout of the work space.

Such purifiers are provided with an orientable suction arm that conveys the fumes into a wheel-mounted structure provided with a filtering section, with a series of filters for returning clean air outside the device.

As regards the movement of any gas cylinders, even for short displacements, they must be carried on adapted trolleys.

The provision of a new mobile welding station is therefore challenging in terms of time and scarcely practical. Moreover, overall space occupation is greater than that of fixed stations.

The aim of the present invention is to provide a mobile welding and purifying apparatus by way of which it is possible to reduce the space occupation of the work station and its setup time.

Within this aim, an object of the invention is to facilitate the preparation of the station.

This aim, as well as these and other objects which will become better apparent hereinafter, are achieved by a mobile welding and purifying apparatus, characterized in that it comprises at least one welding unit and at least one purifier, provided with an arm for aspirating the welding fumes, which are integral with a single supporting surface supported by wheels for the movement of the entire said apparatus.

Further characteristics and advantages of the invention will become better apparent from the description of a preferred but not exclusive embodiment of the apparatus according to the invention, illustrated by way of non-limiting example in the accompanying drawings, wherein:
Figure 1 is a perspective view of the apparatus according to the invention;
Figure 2 is a front view of the apparatus according to the invention;
Figure 3 is a side view of the purifier in the open condition.

With reference to the figures, the apparatus according to the invention is generally designated by the reference numeral 10.

The apparatus is constituted by a plurality of elements that are useful to provide a mobile welding station, comprising a welding unit 11 and a purifier 12 that are integral with a single supporting surface 13 that is supported advantageously by four wheels 14, arranged at the four corners of the supporting surface 13, for the movement of the entire apparatus 10.

The supporting surface 13, the compartment 15 of the purifier 12 and the compartment of the welding unit 11 are made of metallic material, preferably made of powder-painted steel plate.

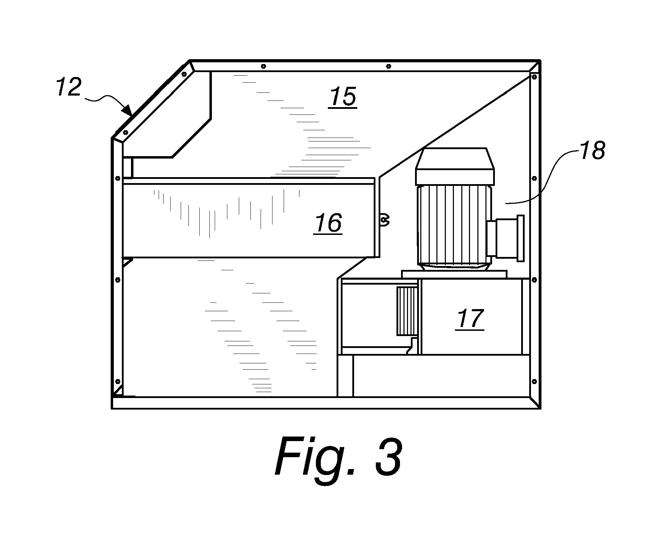

In Figure 3, the compartment 15 of the purifier 12 is open on one side to show its interior. This figure clearly shows that it comprises a filtering section 16, obviously constituted by at least one filter, for example an H13 filter impregnated with activated charcoal, and is provided with a centrifugal electric fan 17, downstream of the filtering section 16 and located in a soundproofed compartment 18.

The purifier 12 is also conveniently provided with a suction arm 19 for aspirating the welding fumes, with an articulated rigid tube (which can be replaced equivalently by a flexible one) to facilitate its placement at the weld.

The suction arm 19 extends from the compartment 15 and has, at its free end, a hood 20 that is orientable, since it is provided with a multidirectional joint 21.

The apparatus 10 also comprises, in the illustrated case, a cylinder 22 of technical gas, associated with the supporting surface 13, to be transported with the rest of the apparatus 10 to the welding station.

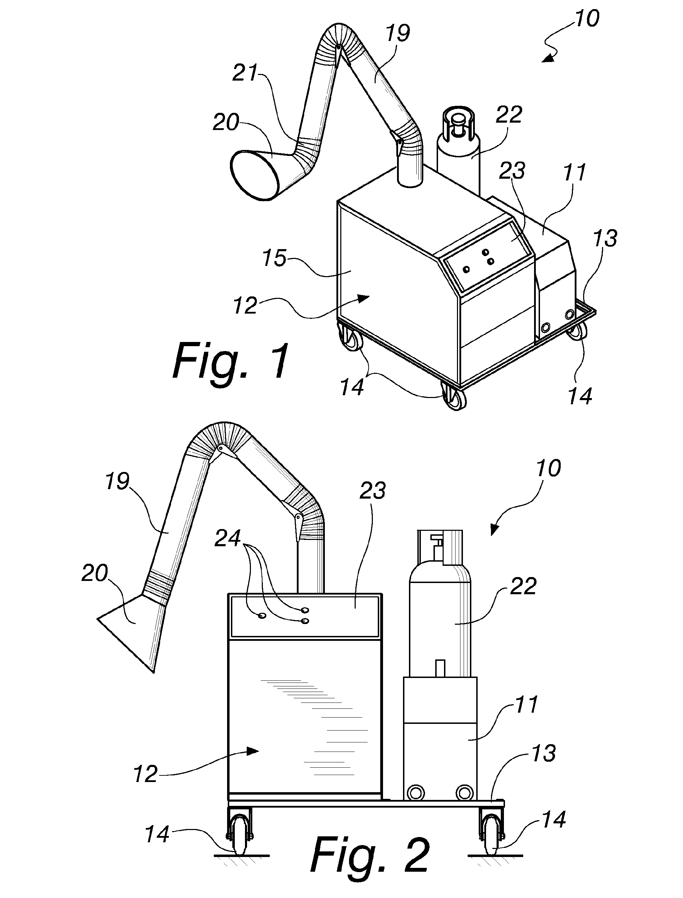

As shown in Figures 1 and 2, on one side of the apparatus 10, particularly on one face of the compartment 15 intended to be directed toward the operator during welding operations, there is an electrical panel 23 for the control and actuation of the operation of the purifier 12.

The electrical panel 23 is conveniently provided with luminous indicators 24 adapted to indicate the operation of the purifier 12, any clogging of the filters and any automatic starting of suction when the welding operations commence.

The apparatus 10 comprises further a device for detecting the electric welding arc, which controls the automatic starting of the purifier 12.

Use of the structure, according to the invention, is as follows.

By way of the wheels 14 of the supporting surface 13, the apparatus 10 can be moved easily to the region chosen for the welding operations with all the described components, i.e., the welding unit 11, the purifier 12 and the cylinder 22.

The operator can thus carry the necessary equipment by moving the entire apparatus 10, without having to place one component at a time.

It should be noted that the cylinder 22 is carried together with the other components on the wheels 14, therefore in a manner substantially similar to transport on a trolley.

The apparatus 10 is compact as a whole, with minimal space occupation with respect to that of the separate components, and is also easily movable by hand by the operator, also thanks to the presence of the wheels, which obviously facilitate its handling.

In practice it has been found that the invention achieves the intended aim and objects, providing an apparatus that allows to set up a mobile welding station easily and quickly, its space occupation being reduced with respect to that of the movable stations that could be set up until now.

Another advantage of the apparatus according to the invention is the automatic power-on of the purifier upon welding.

A further advantage of the apparatus is that it is possible to use a single electric power supply cord, also reducing the space occupation of the electrical cables and preventing them from becoming entangled.

The invention thus conceived is susceptible of numerous modifications and variations, all of which are within the scope of the accompanying claims; all the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mobile welding and purifying apparatus (10), **characterized in that** it comprises at least one welding unit (11) and at least one purifier (12), provided with an arm (19) for aspirating the welding fumes, which are integral with a single supporting surface (13) supported by wheels (14) for the movement of the entire said apparatus (10).

2. The apparatus according to claim 1, **characterized in that** it comprises a cylinder (22) of technical gas that is associated with said supporting surface (13).

3. The apparatus according to claim 1, **characterized in that** said suction arm (19) has, at its free end, a hood (20) with a multidirectional joint (21).

4. The apparatus according to claim 1, **characterized in that** it comprises an electrical panel (23) for the control and actuation of the operation of the purifier (12).

5. The apparatus according to claim 1, **characterized in that** said purifier (12) comprises a filtering section (16) provided with filters.

6. The apparatus according to claim 5, **characterized in that** said purifier (12) comprises a centrifugal electric fan (17) downstream of said filtering section (16).

7. The apparatus according to claim 6, **characterized in that** said centrifugal electric fan (17) is arranged, inside said purifier (12), in a soundproofed compartment (18).

8. The apparatus according to claim 1, **characterized in that** it comprises a device for detecting the electric welding arc that controls the automatic starting of said purifier (12).
